Europäisches Patentamt

European Patent Office

Office européen des brevets

(19)

(11) Veröffentlichungsnummer: **0 318 717 B1**

(12) # EUROPÄISCHE PATENTSCHRIFT

(45) Veröffentlichungstag der Patentschrift: **01.09.93**

(51) Int. Cl.5: **B42D 15/02**

(21) Anmeldenummer: **88118330.5**

(22) Anmeldetag: **03.11.88**

(54) **Dokument mit fälschungssicherem Oberflächenrelief und Verfahren zur Herstellung desselben.**

(30) Priorität: **04.12.87 DE 3741179**

(43) Veröffentlichungstag der Anmeldung:
**07.06.89 Patentblatt 89/23**

(45) Bekanntmachung des Hinweises auf die
Patenterteilung:
**01.09.93 Patentblatt 93/35**

(84) Benannte Vertragsstaaten:
**AT BE CH DE ES FR GB IT LI LU NL SE**

(56) Entgegenhaltungen:
DE-A- 2 829 778      FR-A- 2 255 661
US-A- 3 279 826      US-A- 3 402 488
US-A- 3 468 046      US-A- 4 151 667

(73) Patentinhaber: **GAO Gesellschaft für Automation und Organisation mbH**
**Postfach 70 07 03, Euckenstrasse 12**
**D-81307 München(DE)**

(72) Erfinder: **Heckenkamp, Christoph**
**An der Stemmerwiese 2**
**D-8000 München 70(DE)**
Erfinder: **Stenzel, Gerhard**
**Schiessstättstrasse 6**
**D-8000 München 2(DE)**
Erfinder: **Kaule, Wittich**
**Lindacher Weg 13**
**D-8089 Emering(DE)**

(74) Vertreter: **Klunker . Schmitt-Nilson . Hirsch**
**Winzererstrasse 106**
**D-80797 München (DE)**

EP 0 318 717 B1

EP 0 318 717 B1

**Beschreibung**

Die Erfindung betrifft ein Dokument mit einem Oberflächenrelief, das bezogen auf die Dokumentenoberfläche erhabene und/oder vertiefte Bereiche aufweist sowie Verfahren zur Herstellung derartiger Dokumente.

Derartige Dokumente sind z. B. Wertpapiere, Banknoten, Ausweise und Ausweiskarten. Letztere werden als Kreditkarten, Bankkarten, Barzahlungskarten, Berechtigungskarten oder dergleichen in den verschiedensten Gebieten eingesetzt, zu denen z. B. der bargeldlose Zahlungsverkehr, Zugangskontrollsysteme und verschiedenste Dienstleistungssysteme gehören. Diese Ausweiskarten weisen in der Regel auf den Karteninhaber bezogene Daten auf, die beim sogenannten Personalisierungsvorgang aufgebracht werden. Eine verbreitete Form der Einbringung dieser Daten ist das Prägeverfahren, bei dem die einzelnen Zeichen mittels mechanischer Stempel unter Verformung des Kartenmaterials eingeprägt werden (DE-PS 14 36 810). Man unterscheidet zwischen sogenannten "Hochprägedaten", die von der Kartenrückseite geprägt werden und als erhabene Bereiche auf der Kartenvorderseite vorliegen und sogenannten "Tiefprägedaten", bei denen die Prägung von der Kartenvorderseite zur Kartenrückseite erfolgt. Bei der Tiefprägung liegen die Zeichen folglich als vertiefte Bereiche in der Kartenvorderseite vor. Zur besseren Sichtbarmachung der einzelnen Schriftzeichen werden diese in den Scheitelbereichen (Hochprägung) bzw. vertieften Bereichen (Tiefprägung) noch zusätzlich mit einer zur Umgebung stark kontrastierenden meist schwarzen Farbe eingefärbt.

Der besondere Vorteil dieser geprägter Kartendaten liegt darin, daß die in Reliefform vorliegenden Daten zugleich als Druckstock verwendet werden können. Damit ist bei einer späteren Benutzung der Karte eine einfache Übertragung der Daten auf den aktuellen Zahlungsbeleg möglich. Die Übertragung erfolgt in sogenannten Imprintergeräten, in die die Karte und der Zahlungsbeleg eingelegt und über einen mechanischen Prägevorgang unter Verwendung von Kohle- bzw. Durchschlagpapier die Benutzerdaten auf den Zahlungsbeleg abgebildet werden (DE-PS 20 18 927). Eine international festgelegte Norm bestimmt neben der Lage der Prägedaten auf der Ausweiskarte auch deren Gestalt und deren Reliefhöhe (ISO-Norm 7811/1).

Diese bei der Erstellung und im späteren praktischen Gebrauch kostenmäßig vorteilhafte Darstellungsform der benutzerbezogenen Daten einer Ausweiskarte hat, wie sich seit längerer Zeit weltweit zeigt, den gravierenden Nachteil, daß diese Daten relativ ungeschützt Fälschungsversuchen ausgesetzt sind. Da es sich bei den Kartenmaterialien in der Regel um Thermoplaste, insbesondere PVC handelt, können die geprägten Daten relativ leicht wieder niedergebügelt und die Karten mit anderen Daten wieder neu geprägt werden. Die ursprüngliche Einfärbung kann im allgemeinen mit im Handel erhältlichen Lösungsmitteln entfernt und eine gefälschte Karte mit verändertem Datensatz wieder mit handelsüblichen Farben neu eingefärbt werden. Damit können Originalkarten, also von ihrem Aufbau und ihrer Ausstattung her "echte" Karten, in betrügerischer Absicht relativ einfach mit falschen Benutzerdaten versehen werden, ohne daß dies für Außenstehende überprüfbar oder erkennbar ist.

Um dieser leichten Verfälschbarkeit zu begegnen und die daraus resultierenden finanziellen Verluste in Grenzen zu halten, sind von vielen Seiten Vorschläge zur Lösung dieses Problems gemacht worden.

Einige dieser Vorschläge zielen darauf ab, die mechanische Hochprägung durch andere Verfahren zur Erzeugung nicht rückbildbarer Reliefstrukturen zu ersetzen.

So ist z. B. aus der DE-OS 22 23 290 ein Verfahren bekannt, bei dem die geprägten Daten nur auf einer Kartenoberfläche in Erscheinung treten. Bei diesem Verfahren werden die Personalisierungsdaten in Metallplatten eingeprägt und bei der Kaschierung der Ausweiskarte auf die Kartenoberfläche übertragen. Während des Kaschiervorgangs erweicht das Kartenmaterial und fließt in die Vertiefungen der Metallplatte ein, ohne auf der Rückseite ein Negativrelief zu hinterlassen. Auf diese Weise entstehen ebenfalls als Druckstock verwendbare Zeichen, die aber nicht mehr in der herkömmlichen Form rückgeprägt und verändert werden können.

Diese Art der Prägung ist aber wesentlich aufwendiger, da für jede Karte eine Metallplatte mit den entsprechend eingravierten Personalisierungsdaten hergestellt werden muß und dieser Personalisierungsvorgang ein von der Kartenfertigung nicht trennbarer Verfahrensschritt ist.

Erst mit der DE-OS 32 13 315 wird eine Ausweiskarte vorgestellt, die nicht nur in einfacher Form mit als Druckstock verwendbarem Zeichensatz versehen werden kann, bei der Zeichen auch noch in einer besonders fälschungssicherer Form vorliegen. Das bekannte Verfahren schlägt vor, die Ausweiskarte mit einer schäumbaren, entsprechende Treibmittel enthaltenden Kunststoffschicht zu versehen und diese Schicht dann lokal zur Ausbildung der gewünschten Zeichen in Reliefstruktur aufzuschäumen. Vorzugsweise wird hierzu ein Laserstrahl verwendet, der in dem aufschäumbaren Kunststoffmaterial die für die Auslösung des Schäumprozesses bzw. Aktivierung der Treibmittel notwendige Wärme erzeugt. Durch entsprechende Wahl des Kunststoffmaterials, des Treibmittels und der Laserparameter wie Intensität etc.

2

kann dieser Aufschäumprozeß gezielt durchgeführt werden, um die Zeichen normgerecht bezüglich ihrer Abmaße und ihrer Reliefhöhe zu erzeugen. Gleichzeitig kann diese Aufschäumung mit einer Verfärbung des Kunststoffmaterials verbunden sein, so daß sich der Einfärbungsprozeß erübrigt. Da die Verfärbung in dem Kunststoffmaterial selbst vorliegt und zudem irreversibel ist, ist sie fälschungssicher und auch gegen Abrieb beständig.

Obwohl mit der bekannten Karte eine hohe Fälschungssicherheit erreicht wird, sind zu deren Herstellung schäumbare Folienschichten vorzusehen, die nicht vorbehaltlos bei seit langem allgemein bewährten Schichtaufbauten unverändert eingesetzt werden können.

Gemäß einem weiteren Verfahren (DE-OS 34 09 761) wird auf die äußere Oberfläche einer Ausweiskarte eine Zusatzschicht aufgebracht, deren Dicke der geforderten Reliefhöhe der Daten entspricht. Die Zeichen werden dann durch lokale Abtragung des Materials dieser Zusatzschicht mit Hilfe eines Laserstrahls ausgebildet.

Auch dieses Verfahren verlangt die Verwendung spezieller Schichten, die einerseits die gute Abtragbarkeit und andererseits gute Hafteigenschaften aufweisen müssen.

Andere bekannte Verfahren zielen darauf ab, die nach herkömmlichen Verfahren erzeugten Prägedaten durch zusätzliche Maßnahmen gegen Verfälschung zu sichern.

So ist z. B. aus der DE-PS 32 48 784 ein Verfahren bekannt, bei dem ein zum Prägedatensatz identischer zweiter Datensatz mittels eines Laserstrahls in einer irreversiblen Form in das Kartenmaterial eingebracht wird. Durch direkten Vergleich des Prägedatensatzes mit dem zweiten unveränderbaren Datensatzes kann ohne Hilfsmittel auf die Richtigkeit der Prägedaten geschlossen werden. Gemäß einer anderen Ausführungsform (DE-PS 33 14 327) wird über die Prägedaten - ebenfalls mittels eines Lasers - ein Sicherheitsmuster, z. B. ein Linienmuster, gelegt, das aufgrund der Oberflächenstruktur und der dadurch bedingten veränderten Aufzeichnungsbedingungen typische, den Prägezeichen entsprechende Inhomogenitäten aufweist.

Insbesondere nach einer Rückprägung sind die ursprünglichen Daten aufgrund dieser Inhomogenität im Linienmuster deutlich erkennbar.

Durch beide Verfahren wird eine hohe Fälschungssicherheit erreicht, die aber den Einsatz eines Lasers erfordert. Außerdem sind diese Schutzmaßnahmen mehr für die visuelle Prüfung geeignet und einer maschinellen Prüfung weniger zugänglich.

Weiterhin ist es bekannt (DE-OS 34 40 653), Ausweiskarten, die mit Prägezeichen versehen werden sollen, zusätzlich noch mit thermosensiblen Stoffen auszustatten. Da der Fälscher zur Vereinfachung der Rückbildung der Prägestruktur das Kartenmaterial meist erwärmt und dadurch erweicht, können thermosensible Stoffe, deren Farbumschlagstemperatur im Bereich der dabei erreichten Temperaturen liegen, derartige Fälschungsversuche sichtbar machen.

Ein wesentlicher Nachteil dieses Verfahrens ist, daß auch bei der Herstellung der Ausweiskarten diese Temperaturen, bei denen die thermosensiblen Stoffe eine Farbänderung vollziehen, nicht erreicht werden dürfen. Damit sind die üblichen Herstellverfahren von Ausweiskarten, bei denen die einzelnen Kartenschichten unter Anwendung von Wärme und Druck miteinander verpreßt werden, nicht mehr anwendbar. Außerdem ist diese bekannte Karte nicht gegen eine Kaltverformung, also eine Rückprägung ohne gleichzeitige Erwärmung geschützt. Schließlich erfüllt die Karte auch nicht die üblichen Bedingungen bezüglich der Temperaturbeständigkeit und wird bei z. B. starker Sonneneinstrahlung oder unachtsamer Lagerung, z. B. in der Nähe von Wärmequellen, bereits eine Verfärbung zeigen, durch die der Besitzer der Karte dann ungerechtfertigt in den Verdacht kommen kann, eine Manipulation vorgenommen zu haben.

Schließlich sind aus der DE-OS 33 14 244 noch verschiedene Verfahren zur Fälschungssicherung von Prägedaten bekannt, die insbesondere darin bestehen, im Scheitelbereich der Prägezeichen chemisch oder mechanisch Schichtmaterial abzutragen, um dadurch eine zur Umgebung kontrastierende tieferliegende Schicht freizulegen. Eine andere Maßnahme sieht vor, in die Ausweiskarte eine mit Mikrokapseln ausgestattete Schicht einzubringen, wobei diese Mikrokapseln farberzeugende Substanzen enthalten. Bei der mechanischen Prägung werden gleichzeitig diese Substanzen freigesetzt und erzeugen eine entsprechende nicht mehr veränderbare Verfärbung im Innern der Karte.

Der vorliegenden Erfindung liegt nun die Aufgabe zugrunde, ein mit einem Oberflächenrelief, insbesondere in Form von Prägezeichen, versehenes Dokument zu schaffen, das einfach und kostengünstig herstellbar ist und das es gestattet, in einfacher und sicherer Form das Dokument und auch darauf aufgebrachte Daten auf Echtheit und Originalität prüfen zu können, um die Daten somit gegen Verfälschung zu sichern. Außerdem ist es das Ziel, Verfahren zur Herstellung derartiger Dokumente zu schaffen.

Die Aufgabe wird durch die im kennzeichenden Teil der unabhängigen Ansprüche angegebenen Merkmale gelöst. Vorteilhafte Weiterbildungen sind Gegenstand der Unteransprüche.

Ein Merkmal der vorliegenden Erfindung ist darin zu sehen, daß Reliefstrukturen eines Dokuments, wie z. B. die als Druckstock verwendbaren Prägezeichen einer Ausweiskarte, derart mit mindestens einem Lumineszenzstoff versehen sind, daß über die Prüfung des Vorhandenseins, der räumlichen Verteilung und der Eigenschaften des bzw. der Lumineszenzstoffe hinsichtlich Anregung und Emission, die Echtheit des Dokuments und Richtigkeit der Daten festgestellt werden kann. Vorzugsweise werden daher Lumineszenzstoffe verwendet, die der Allgemeinheit nicht zugängig sind. Die Stoffe können gegebenenfalls auch in einem nur mit hohem technischen Aufwand analysierbaren Gemisch verschiedener luminiszierender und nicht luminiszierender Stoffe verwendet werden. Die zu markierenden Bereiche sind bei hochgeprägten Zeichen vorzugsweise die Scheitelbereiche und bei den tiefgeprägten Zeichen die die Zeichenform wiedergebende Talsohlen dieser Vertiefungen.

Obwohl die Verwendung von Lumineszenzstoffen zur Absicherung von Wertpapieren aus einer Vielzahl von Druckschriften bekannt ist und andererseits das Problem der Fälschungssicherung von Prägedaten schon seit langem bestand, zeigt der eingangs genannte Stand der Technik doch, daß hier Lösungen zur Absicherung von Prägezeichen immer anderweitig gesucht wurden.

Erst durch die erfindungsgemäße Lösung wird aber nun eine in ihrer Einfachheit sicher überraschende Lösung zur Fälschungssicherung von Prägezeichen vorgegeben, wobei - wie später noch näher erläutert wird - verfahrenstechnisch die bisherige Herstellung der Prägezeichen in keiner Weise verändert werden muß.

Diese Lösung gestattet es auch, nicht nur die geprägten Daten auf Verfälschung zu prüfen (fehlende oder unvollständige Lumineszenz), sondern auch gleichzeitig deren Echtheit festzustellen, indem die spezifischen und charakteristischen Eigenschaften der jeweils verwendeten Lumineszenzstoffe geprüft werden. Die auf die verschiedenen Aspekte ausgerichteten Prüfungen können visuell oder auch maschinell vorgenommen werden, je nachdem welche Lumineszenzstoffe für die Absicherung verwendet werden.

Außerdem können auch Prägestrukturen auf Wertpapieren, wie z. B. die bei Aktien stets vorliegenden, blindgeprägten Zeichen, Muster, Signets etc., zuverlässig gegen Fälschung gesichert werden.

Die mit Lumineszenzstoffen versehenen Zeichen sind außerdem sehr gut maschinell lesbar, da durch Verwendung entsprechender Filter Störungen durch Umgebungslicht auf ein Minimum reduziert werden können und man dadurch einen hohen Kontrast im Lesesignal, d. h. ein gutes Signal/Rauschverhältnis, erhält. Die Erfindung bietet damit eine einfache Lösung benutzerbezogene Daten maschinell zu lesen und diese Daten in der jeweils gewünschten Form weiter zu verarbeiten, zu übertragen etc. Die bisher bekannte aufwendige und störanfällige, meist mechanische Abtastung hochgeprägter Zeichen (DE-PS 24 06 354, US-PS 3,917,925) kann damit in einfacher Weise umgangen werden.

Des weiteren kann aus einer Datenzeile eines mit Lumineszenzstoff versehenen Hochprägedatensatz z. B. durch eine integrale Abtastung der gesamten Datenzeile oder Teile dieser Datenzeile ein von Karte zu Karte unterschiedliches Signal gewonnen werden. Derartige Signale können dann in bekannter Weise (DE-PS 28 58 266) zur individuellen Echtheitserkennung von Dokumenten verwendet werden.

Neben den Prägezeichen können auch nahezu beliebige Reliefstrukturen, auch zufällig entstandene Reliefstrukturen, in einfacher Weise maschinell gelesen werden, indem vorzugsweise die stark erhöhten Bereiche mit Lumineszenzstoff versehen werden. Damit können über den Umweg der Messung der lokalen Verteilung der Emission des Lumineszenzstoffes markante Stellen eines Oberflächenreliefs mit relativ einfachen Mitteln festgestellt werden. Mehr oder weniger zufällig eingebrachte Unebenheiten in einer Oberfläche eines Dokuments, wie z. B. einer Ausweiskarte, oder auch zufällig entstandene Unebenheiten, wie die Oberflächengranulation, können zur Gewinnung derartiger individueller Signale durch Aufnahme des Lumineszenzbildes maschinell erfaßt, verarbeitet und als Echtheitskenndaten z B. in einem Magnetstreifen oder in einem elektronischen Speicher einer Ausweiskarte abgelegt werden. Bei einem späteren Verifizierungsvorgang wird das Lumineszenz- bzw. Reliefbild wieder abgetastet und die daraus gewonnenen Daten mit den gespeicherten Daten auf Ähnlichkeit geprüft.

In einer bevorzugten Ausführungsform wird der Lumineszenzstoff nach dem sogenannten Heißprägeverfahren, d. h. über ein Transferband auf die erhöhten Bereiche eines Dokuments übertragen. Bei diesem Heißprägeverfahren wird ein Transferband mit den auf das Dokument aufzubringenden Stoffen beschichtet, wobei das Band gegebenenfalls sowohl eine visuell kontrastierende Farbe als auch den Lumineszenzstoff trägt. Damit können in einem Verfahrensgang mehrere Stoffe gleichzeitig aufgebracht werden und dort, z. B. mit Hilfe einer zusätzlichen Klebeschicht, fixiert werden. Der oder die Lumineszenzstoffe und die kontrastierende Farbschicht können in einer einzigen Schicht in Form einer Mischung oder auch in zwei oder mehr über- und nebeneinanderliegenden Schichten vorliegen, wobei vorzugsweise eine Anordnung gewählt wird, bei der die Lumineszenzstoffe nach Übertragung die auf der Karte äußere Schicht bilden, so daß die Anregungsstrahlung und die Emission nicht durch die Farbschicht gestört wird.

Dieses Transferverfahren eignet sich insbesondere auch dazu, Reliefstrukturen an der Oberfläche eines Papierträgers, wie z. B. eine Aktie, Banknote etc., die z. B. über Stahltiefdruck erzeugt werden, mit ein oder mehreren Lumineszenzstoffen, vorzugsweise in Form eines mehrfarbig lumineszierenden Musters, aufzubringen.

Besonders vorteilhaft ist z. B. auch die Verwendung sublimierbarer Farben und Lumineszenzstoffe, da diese nach deren Verdampfung durch Diffusion oder Migration in Kunststoffmaterial eindringen und damit fixiert und ohne Zerstörung des Dokuments nicht mehr herauslösbar sind.

Weitere Vorteile, insbesondere vorteilhafte Weiterbildungen sind Gegenstand der Beschreibung des Erfindungsgegenstandes anhand der Figuren.

Die Figuren zeigen:

Fig. 1　　　　eine Ausweiskarte in der Aufsicht,

Fig. 2　　　　eine Schnittansicht dieser Karte,

Fig. 3 und 4　　verschiedene Ausführungen eines Transferbandes,

Fig. 5　　　　die Schnittansicht einer Ausweiskarte mit tiefgeprägten Zeichen,

Fig. 6　　　　einen Ausschnitt aus einer Ausweiskarte mit schematischer Darstellung des Sensorkopfs der Abtastung,

Fig. 7　　　　ein bei der Abtastung gewonnenes Signal,

Fig. 8, 9　　　weitere Ausführungsform der Erfindung.

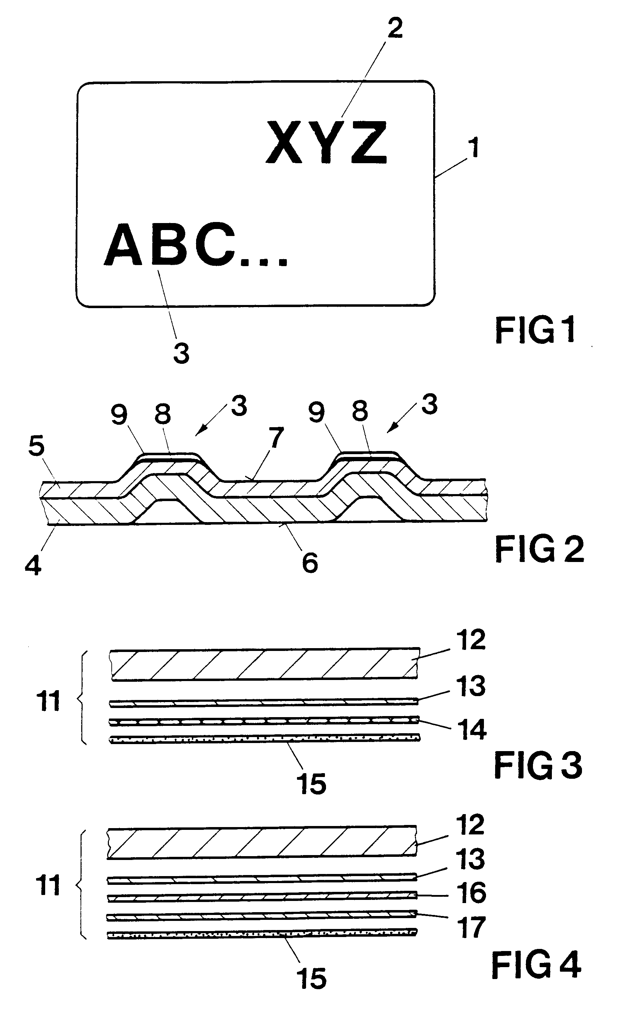

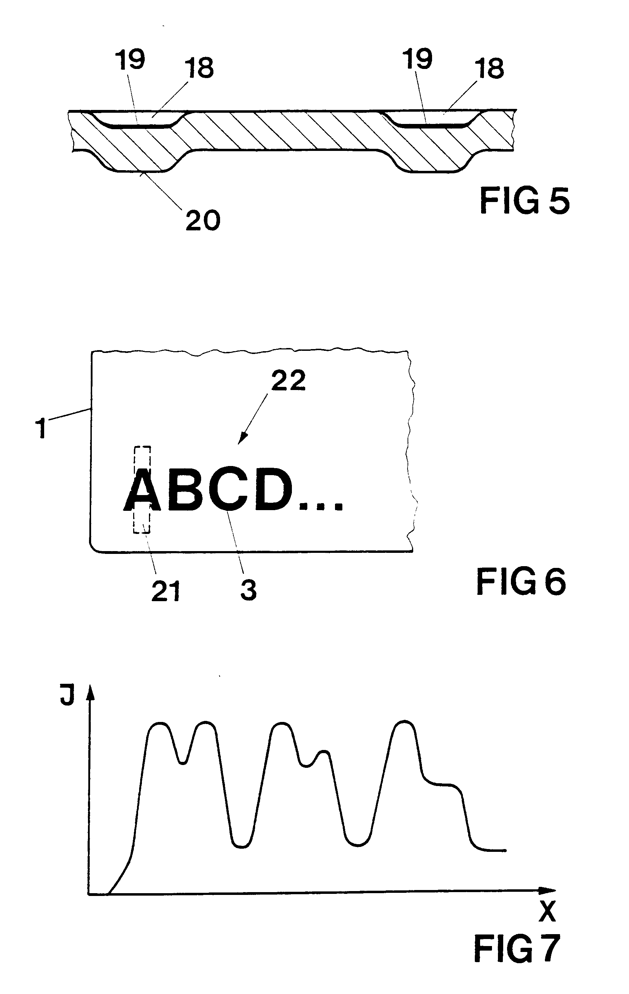

Die Fig. 1 und 2 zeigen beispielhaft für ein Dokument eine Ausweiskarte 1, mit dem für sie typischen Informationsinhalt. Dazu gehört z. B. die Angabe 2 des ausgebenden Kreditinstituts, die z. B. drucktechnisch auf das Karteninlett 4 aufgebracht wird. Das Karteninlett ist vorzugsweise ein- oder beidseitig mit einer transparenten Deckfolie 5 abgedeckt. Schließlich trägt die Karte die benutzerbezogenen Daten 3, die in einer als Druckstock verwendbaren Reliefform in die Karte eingebracht sind. Bei der Hochprägung werden die Zeichen von der Kartenrückseite 6 auf die Kartenvorderseite 7 durchgeprägt, so daß das Zeichen in Form einer Erhebung auf der Kartenvorderseite erscheint. Bei tiefgeprägten Zeichen erfolgt die Prägung von der Kartenvorderseite in Richtung der Kartenrückseite und das Zeichen erscheint dann in Form einer Vertiefung auf der Kartenvorderseite (Fig. 5). Die geprägten Zeichen werden zur besseren visuellen Sichtbarmachung mit kontrastierender, meist schwarzer, goldener oder silbener Farbe 8 (Fig. 5, 19) eingefärbt.

Diese Reliefstrukturen werden nun zusätzlich in ihren Scheitelbereichen oder den Talsohlen, mit Lumineszenzstoff versehen. Dieser Lumineszenzstoff kann direkt der Farbe 8 zur Einfärbung der Prägezeichen beigemischt werden, er kann aber auch als separate Schicht 9 aufgebracht werden. Ist das Oberflächenrelief in seinen Scheitelbereichen einzufärben, so bietet sich das bekannte Heißprägeverfahren an, gemäß dem die auf die Karte aufzubringenden Schichten zunächst auf ein Trägerband aufgebracht werden und von diesem Trägerband auf die Karte unter Anwendung von Druck und Wärme übertragen werden. Wegen der Reliefstruktur der Karte werden die Schichten des Trägerbands nur auf die Bereiche übertragen, die mit dem Trägerband in engem Kontakt kommen und dies ist hier nur in den erhöhten Bereichen des Oberflächenreliefs der Fall.

Die Fig. 3 zeigt ein derartiges Transferband 11, wobei die Schichten zur besseren Anschaulichkeit mit Abstand zueinander und nicht maßstabsgetreu gezeigt sind. Das Trägerband 12 ist vorzugsweise ein mechanisch gut belastbares und thermostabiles Kunststoffband, wobei das bevorzugte Material hierzu Polyester ist. Auf dieses Trägerband wird eine Lackschicht 13 aufgebracht, die später eine äußere Deckschicht der Karte bildet und die darunterliegenden Schichten wie die nachfolgende Farbschicht 14 gegen Abrieb und mechanische Beanspruchung schützt. Die bereits angesprochene Farbschicht 14 enthält die für die visuelle Sichtbarmachung notwendigen Farbstoffe. Dies sind meist schwarze, gold- oder silberfarbene Pigmente sowie den Lumineszenzstoff. Dabei können organische oder anorganische Lumineszenzstoffe Anwendung finden, wobei aber sachbedingt Lumineszenzstoffe verwendet werden, die im Handel nicht erhältlich sind. Der Lumineszenzstoff kann so gewählt werden, daß er z. B. nicht nur maschinell, sondern auch visuell sichtbar ist, z. B. mit einer Emission im IR- und im visuellen Spektralbereich. Das Mischverhältnis von Farbpigmenten und Lumineszenzstoffen und deren farbliche Konstellation sind so zu wählen, daß das Anregungslicht und/oder Emissionslicht des Lumineszenzstoffes in ausreichender Intensität vorliegen bzw. nicht in zu starkem Maße von den Farbpigmenten absorbiert wird.

Die Fixierung dieser Farb- und Lackschicht auf der Ausweiskartenoberfläche kann z. B. mit Hilfe einer Klebeschicht 15 erfolgen, die unter Anwendung von Wärme und Druck aktiviert wird. Eine andere Möglichkeit ist, sublimierbare und/oder migrierende Farb- und Lumineszenzstoffe zu verwenden, die z. B. bei der Heißprägung verdampfen und in angrenzende Schichten, insbesondere in das Kunststoffmaterial einer Karte, eindringen.

5

Eine weitere Ausführungsform eines Transferbandes zeigt die Fig. 4. Gemäß dieser Variante bilden der Lumineszenzstoff und die Farbpigmente separate Schichten 16 bzw. 17, wobei die den Lumineszenzstoff enthaltende Schicht 16 zwischen der später außenliegenden Lackschicht 13 und der Farbschicht 17 eingebracht ist. Da der Lumineszenzstoff hier nicht durch Farbpigmente abgedeckt und damit in seinem Emissionsvermögen eingeschränkt wird, kann die notwendige Stoffmenge erheblich reduziert werden und trotzdem eine gut sichtbare bzw. maschinell erkennbare Emission erreicht werden. Die Transferbandtechnik bietet auch eine einfache Möglichkeit, verschiedenfarbig emittierende Lumineszenzstoffe in Form beliebiger, z. B. irisierende Muster, aufzubringen, wenn das Transferband mit einer entsprechend gestalteten lumineszierenden Schicht versehen wird. Beispielsweise kann hierzu das Muster so gewählt werden, daß zwei Teilbereiche des Oberflächenreliefs in verschiedenen Farben lumineszierend erscheinen und in einem dazwischenliegenden Teilbereich beide Farben nebeneinander vorliegen, so daß eine reine Lumineszenzfarbe kontinuierlich oder über eine Mischfarbe in die andere reine Lumineszenzfarbe übergeht. Außerdem können beispielsweise feine Striche oder großflächige Signets in einer Lumineszenzfarbe über einen andersfarbig lumineszierenden Untergrund aufgebracht werden, die bei jeweils geeigneten Oberflächenstrukturen, z. B. feine Raster, zur Wirkung kommen.

Die den Lumineszenzstoff abdeckende Lackschicht kann z. B. ein unter UV-Licht aushärtbarer Kunstharzlack sein, der nach Übertragung auf die Karte ausgehärtet wird und somit der Kartenoberfläche eine ausreichende Härte verleiht. Der Lumineszenzstoff ist damit gegen mechanische Belastung, insbesondere Abrieb, beim späteren täglichen Gebrauch der Karte geschützt.

Die Lumineszenzstoffaufbringung mittels des Heißprägeverfahrens hat insbesondere den Vorteil, daß damit in einem Arbeitsgang sowohl die kontrastierende Farbe als auch der Lumineszenzstoff aufgebracht werden kann, wodurch bei der Kartenherstellung keine zusätzlichen Verfahrensschritte notwendig sind. Ein weiterer Vorteil des Heißprägeverfahrens ist darin zu sehen, daß dieses Verfahren auch zur Einfärbung sehr feiner Strukturen anwendbar ist, so daß damit nahezu beliebige Reliefstrukturen in der gewünschten Form mit Lumineszenzstoff versehen werden können.

Neben diesem Heißprägeverfahren können auch andere, z.B. aus dem Buchdruckverfahren bekannte Einfärbtechniken Anwendung finden. Beispielsweise können die Lumineszenzstoffe über eine Walze oder ähnliche Vorrichtungen aufgebracht werden.

Die Fig. 5 zeigt eine Teilschnittansicht einer Ausweiskarte, die mit tiefgeprägten Zeichen 18 versehen ist. Bei diesen Zeichen werden der Lumineszenzstoff und auch die kontrastierende Farbe in die Talsohlen 19 der Reliefstruktur eingebracht. Auch hier können der Lumineszenzstoff und Farbstoff im gleichen Arbeitsgang aufgebracht werden. Vorzugsweise wird hierzu bei der Prägung der Zeichen ein entsprechend ausgerüstetes Farbband zwischen Prägestempel und Ausweiskarte eingebracht und die Übertragung der Farbe und deren Fixierung erfolgt dann meist über mechanischem Weg. Da hier der Lumineszenzstoff in einer geschützten Lage, d. h. in diesen Talsohlen, vorliegt, kann in der Regel auf eine zusätzliche Lackabdeckung, insbesondere einer UV-Lackabdeckung verzichtet werden. Der Lumineszenzstoff kann aber auch auf die Kartenrückseite 20 vorzugsweise nach dem obengenannten Heißprägeverfahren aufgebracht werden, wobei hier ein Lumineszenzstoff geeignet ist, der unter nichtaktinischem Licht transparent ist. Da die Zeichen bei Anregung des Lumineszenzstoffes in Spiegelschrift erscheinen, eignet sich dieses Verfahren vorwiegend für die maschinelle Prüfung.

Die Prägezeichen können nun in einfacher Weise mit Sensoren, die auf das Lumineszenzlicht ansprechen, geprüft und maschinell gelesen werden. Durch Wahl geeigneter Filter, die den Sensor ausschließlich nur für das Emissionslicht empfindlich machen, ist eine sichere Erkennung gegeben, da das gesamte Umgebungslicht anderer Wellenlängenbereiche ausgeschaltet wird. Damit ist nicht nur ein Lesen der Zeichen in einfacher Weise möglich, sondern gleichzeitig auch eine Echtheitsprüfung, da das Lesegerät nur dann anspricht, wenn tatsächlich Lumineszenzstoffe mit den erforderlichen Emissionseigenschaften vorliegen.

Neben der reinen Zeichenerkennung und Bestimmung der Benutzerdaten kann die Lumineszenzverteilung auf der Karte auch dazu verwendet werden, ein individuelles von Karte zu Karte unterschiedliches Signal zu gewinnen. Wie in Fig. 6 dargstellt, wird hier z. B. ein Sensor verwendet, dessen Abtastfläche z. B. die Form des in Fig. 6 gezeigten Rechtecks 21 aufweist. Wird dieser Sensor über die Datenzeile 22 geführt und das in der Abtastfläche empfangene Licht in Form einer Intensitätsverteilung aufgezeichnet, so ergibt sich ein Kurvenverlauf, wie er z. B. in Fig. 7 im Prinzip dargestellt ist. Der Kurvenverlauf wird u.a. bestimmt durch die Form der Zeichen, aber auch durch Herstellungs- und Fertigungstoleranzen bei der Lumineszenzstoffaufbringung und der Abtastgeometrie des Sensorkopfes. Dieses Analogsignal kann nun direkt auf der Karte aufgezeichnet werden oder auch digitalisiert, komprimiert und vorzugsweise auch in verschlüsselter Form in ein Speichermedium der Karte (Magnetpiste, elektronischer Speicher etc.) aufgezeichnet werden. Beim späteren Gebrauch der Karte wird dann die Datenzeile in der gleichen Form nochmals abgetastet und das abgetastete Ergebnis mit dem zuvor aufgezeichneten verglichen. Derartige Verfahren zur Echtheitsbestimmung von Datenträgern sind aus der eingangs zitierten DE-PS 28 58 266 bzw. DE-28 29 778 bekannt.

Die erfindungsgemäße Lösung, also die partielle Ausstattung von Reliefstrukturen mit Hilfe von Lumineszenzstoffen, ist nicht auf Hoch- (Tief-) Prägedaten begrenzt, sondern kann auch dazu verwandt werden, beliebige reliefartige Oberflächenbereiche abzusichern.

Derartige Reliefstrukturen können z. B. auch zufällig entstandene Strukturen sein. Kaschierplatten, die z. B. durch Sandstrahlen eine rauhe Oberfläche erhalten haben, übertragen ihre Oberflächenrauhigkeit auf die Kartenoberfläche. Diese nur schwer reproduzierbare Oberflächenstruktur kann nun durch Aufbringung von Luminszenzstoff auf die erhabenen Bereiche maschinell und auch visuell in Form eines Lumineszenzbildes "sichtbar" gemacht werden, wobei die räumliche Verteilung der Relief-Spitzen ein die jeweilige Struktur eindeutig charakterisierendes Merkmal ist. Diese Reliefstruktur ist damit in eindeutiger und reproduzierbarer Form erkennbar und auf Veränderungen überprüfbar.

Tastet man diese Struktur bei der Ausgabe der Karte ab und speichert das Ergebnis nach eventueller Verarbeitung der Daten (Digitalisierung, Reduktion, Verschlüsselung, Verknüpfung mit anderen Kartendaten und anderen Informationen etc.) auf der Karte oder in einer Autorisierungszentrale ab, so kann diese Karte zu einem späteren Zeitpunkt in einfacher Weise auf die spezifische Oberflächenstruktur und deren Unversehrtheit überprüft werden. Versuche, innenliegende Kartendaten unter Entfernung der Kartendeckschicht mit mechanischen, thermischen oder chemischen Mitteln zu verändern, können damit eindeutig erkannt werden, da derartige Versuche nicht ohne Zerstörung oder Veränderung der Kartenoberfläche und damit deren Reliefstruktur durchgeführt werden können.

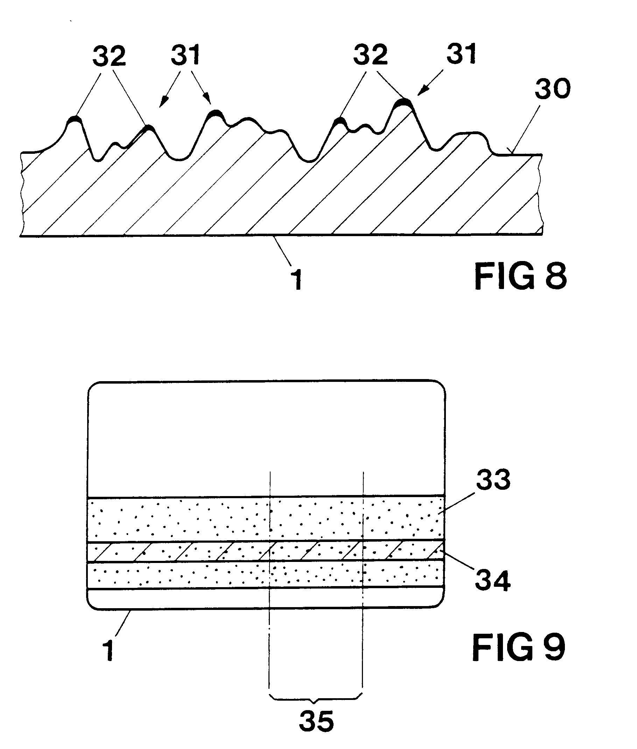

Die Fig. 8 zeigt einen Ausschnitt einer Kartenoberfläche 30, bei der die hervorstehenden Spitzenbereiche 31 der Oberflächenstruktur mit Lumineszenzstoff 32 versehen ist. Obwohl der Lumineszenzstoff deutlich dargestellt ist, kann dieser selbstverständlich zumindest unter nichtaktinischem Licht unsichtbar (transparent) sein, so daß die Karte in gewohnter Umgebung ihr allgemein bekanntes Aussehen besitzt und die Lumineszenz und damit die Reliefstruktur erst nach Anregung unter IR, UV-Licht oder anderer Anregungsquellen maschinell und/oder visuell detektierbar ist.

Die Reliefstruktur mit einem wirren, den Zufall gehorchenden Charakter, kann - wie bereits erwähnt - durch entsprechend vorbehandelte Kaschierplatten oder Platteneinlagen erreicht werden, wobei durch die Zahl der für die Herstellung verwendeten Platten eine definierte Wiederholrate gegeben ist. Durch Schnittoleranzen und gezielte Eingriffe bei der Triggerung etc. kann aber die Wahrscheinlichkeit, daß zwei oder mehr "gleiche" Karten entstehen, auf ein vertretbares Minimum reduziert werden.

Die Kaschierplatten und/oder Einlagen, die zwischen Karte und eigentlicher Kaschierplatte eingebracht werden, können mittels mechanischer Verfahren (z. B. dem Sandstrahlverfahren), chemischer Verfahren (z. B. Ätzverfahren) und anderer bekannter Verfahren mit beliebigen Reliefstrukturen versehen werden.

Die Reliefstrukturen können aber auch mit gleichen oder anderen Mitteln direkt auf das Dokument, Wertpapier, die Karte etc. erzeugt werden. In gleicher Weise kann so z. B. mittels eines zufallsgesteuerten Laserstrahls durch Anschmelzen, Zersetzung, Verdampfung von Kunststoff oder anderen Materialien Strukturen in die äußere Oberfläche eingebracht werden. Des gleichen können auch durch lokale Aufschäumung aufschäumbare Kunststoffmaterialien, durch Aufdruck mit entsprechender Drucktechniken (Stahltiefdruck, Blinddrucktechniken etc.), Aufdampfen von Material usw. strukturierte Oberflächen geschaffen werden, die dann erfindungsgemäß mit einem Lumineszenzstoff versehen werden. Das Dokument weist dann ein Echtheitsmerkmal auf, das insbesondere wegen der Zufallsstruktur nicht bzw. nicht mit einem vertretbarem Aufwand nachahmbar ist.

Da die Zufallsstruktur also schon selbst eine ausreichende Fälschungssicherheit besitzt, können folglich auch handelsübliche Lumineszenzstoffe benutzt werden.

Bei der Auswertung der Oberflächenstruktur einer Ausweiskarte ist es, wie in Fig. 9 gezeigt, nicht unbedingt erforderlich, die gesamte strukturierte Oberfläche 33 der Karte abzutasten, sondern es genügt meist, die Karte z. B. nur längs einer Spur 34 oder innerhalb eines Bereichs 35 abzutasten, da ein daraus gewonnenes Signal bereits eine ausreichende "Individualität" besitzt. Vermerkt man auf dem Aufzeichnungsträger, in welchem Bereich die Reliefstruktur ausgewertet wird, kann - für Außenstehende nicht erkennbar - eine weitere Individualisierung vorgenommen werden, die von Karte zu Karte oder von Prüfung zu Prüfung neu zu wählen ist. Auf diese Weise können auch sehr markante Bereiche ausgewählt oder von Prüfung zu Prüfung vorliegende akzeptierbare Änderungen der Reliefstruktur (Alterung) Berücksichtigung finden.

Vorzugsweise wird der Lumineszenzstoff auch nur längs dieser Spur 34 aufgebracht. Beim Heißprägeverfahren kann durch entsprechende Wahl der Transferbandbreite in einfacher Weise die Spurbreite bestimmt werden und durch die Positionierung des Bandes zur Karte auch die Plazierung der Spur.

Verfahren und geeignete Sensoren zur meßtechnischen Erfassung der Lumineszenz sind an sich bekannt, insbesondere aus den bereits erwähnten Schriften DE-PS 28 29 778 und DE-PS 28 58 266.

| 1  | Ausweiskarte |
|----|---------------|
| 2  | Institsangaben |
| 3  | Prägezeichen |
| 4  | Inlett |
| 5  | Deckfolie |
| 6  | Kartenrückseite |
| 7  | Kartenvorderseite |
| 8  | Farbe |
| 9  | Lumineszenzstoff |

| 11 | Transferband |
|----|---------------|
| 12 | Trägerband |
| 13 | Lackschicht |
| 14 | Farbschicht   ─> Gemisch |
| 15 | Klebeschicht |
| 16 | Lumineszenzstoffschicht } sep. |
| 17 | Farbschicht |
| 18 | Tiefprägung |
| 19 | Talsohlen |
| 20 | rückseitige Prägung |
| 21 | Sensorfläche |
| 22 | Datenzeile |

| 30 | Kartenoberfläche |
|----|-------------------|
| 31 | Spitzenbereich |
| 32 | Lumineszenzstoff |
| 33 | struktureller O-Bereich |
| 34 | Meßspur |
| 35 | Meßbereich |

8

EP 0 318 717 B1

**Patentansprüche**

1. Dokument mit einem bezogen auf die Dokumentenoberfläche erhöhte und/oder vertiefte Bereiche aufweisenden Oberflächenrelief, dadurch **gekennzeichnet,** daß das Dokument zumindest in einem Teilbereich dieses Oberflächenreliefs partiell mit mindestens einen Lumineszenzstoff versehen ist und dieser Lumineszenzstoff entweder nur in den erhabenen oder nur in den vertieften Bereichen vorliegt.

2. Dokument nach Anspruch 1, dadurch **gekennzeichnet,** daß als Druckstock verwendbare Prägezeichen das Oberflächenrelief bilden.

3. Dokument nach Anspruch 2, dadurch **gekennzeichnet,** daß diese Prägezeichen in Hochprägeverfahren eingebracht sind, in Form von Erhebungen auf der Dokumentenvorderseite vorliegen und der Lumineszenzstoff auf die Scheitelbereiche dieser Erhebungen aufgebracht ist.

4. Dokument nach Anspruch 2, dadurch **gekennzeichnet,** daß die Prägezeichen im Tiefprägeverfahren eingebracht sind, wobei die Zeichen als Vertiefungen in der Dokumentenvorderseite vorliegen und daß der Lumineszenzstoff in den Talsohlen dieser Vertiefungen eingebracht ist.

5. Dokument nach Anspruch 1, dadurch **gekennzeichnet,** daß das Oberflächenrelief ein Zufallsmuster darstellt.

6. Dokument nach einem oder mehreren der Ansprüche 1 - 5, dadurch **gekennzeichnet,** daß zur Ausbildung mehrfarbiger lumineszierender Muster zwei oder mehr in unterschiedlichen Spektralbereichen emittierende Lumineszenzstoffe vorliegen.

7. Dokument nach einem oder mehreren der Ansprüche 1-6, dadurch **gekennzeichnet** daß das Oberflächenrelief zusätzlich mit einem zur Umgebung kontrastierenden visuell sichtbaren Farbstoff eingefärbt sind.

8. Dokument nach einem der Ansprüche 1 - 7, dadurch **gekennzeichnet,** daß die Lumineszenzstoffe und gegebenenfalls die Farbstoffe in separaten Schichten vorliegen.

9. Dokument nach einem der Ansprüche 1 - 8, dadurch **gekennzeichnet,** daß der Lumineszenzstoff mit einer Lackschicht abgedeckt ist.

10. Dokument nach Anspruch 9, dadurch **gekennzeichnet,** daß die Lackschicht aus einem polymerisierbaren Harz besteht.

11. Dokument nach einem der Ansprüche 1 - 10, dadurch **gekennzeichnet,** daß der Lumineszenzstoff durch Diffusions- oder Migrationsvorgänge zumindest teilweise im Dokumentenmaterial vorliegt.

12. Dokument nach einem oder mehreren der Ansprüche 1 - 11, dadurch **gekennzeichnet,** daß der Lumineszenzstoff im nichtaktinischen Licht transparent ist.

13. Dokument nach einem der Ansprüche 1 - 12, dadurch **gekennzeichnet,** daß der Lumineszenzstoff nur in einem Teilbereich des Oberflächenreliefs vorzugsweise in Form eines schmalen Bandes vorliegt, das von einer Kante des Dokuments zur gegenüberliegenden Kante verläuft.

14. Verfahren zur Herstellung eines Dokuments nach Anspruch 1, dadurch **gekennzeichnet,** daß zur Aufbringung des Lumineszenzstoffes auf erhabene Bereiche des Oberflächenreliefs ein mehrschichtiges Transferband erstellt wird, das zumindest in einer der zu übertragenden Schichten einen Lumineszenzstoff enthält und dieser Lumineszenzstoff unter Anwendung von Druck und Temperatur nach dem an sich bekannten Transferverfahren auf die erhabenen Bereiche des Oberflächenreliefs übertragen wird.

15. Verfahren nach Anspruch 14, dadurch **gekennzeichnet,** daß das Dokument aus Kunststoff besteht und das Oberflächenrelief während der Kaschierung unter Erweichung des Kunststoffmaterials des Dokuments und Übertragung eines auf einer Kaschierplatte befindlichen Oberflächenreliefs erzeugt wird.

9

**16.** Verfahren nach Anspruch 15, dadurch **gekennzeichnet,** daß das zu übertragende Oberflächenrelief auf der Kaschierplatte durch chemische und/oder mechanische Verfahren wie Ätzen oder Sandstrahlen gebildet wird.

**17.** Verfahren nach Anspruch 14, dadurch **gekennzeichnet,** daß das Oberflächenrelief durch chemische, mechanische oder thermische Verfahren direkt auf dem Dokument erzeugt wird.

**18.** Verfahren nach einem der Ansprüche 14 - 17, dadurch **gekennzeichnet,** daß ein Transferband verwendet wird, das die Lumineszenzstoffe und gegebenenfalls einen visuell sichtbaren Farbstoff im Gemisch in einer Schicht enthält.

**19.** Verfahren nach einem der Ansprüche 14 - 17, dadurch **gekennzeichnet,** daß das Transferband die Lumineszenz- und gegebenenfalls Farbstoffe in mehreren sich gegebenenfalls überlappenden separaten Schichten enthält.

**20.** Verfahren nach einem der Ansprüche 14 - 19, dadurch **gekennzeichnet,** daß das Transferband eine polymerisierbare Lackschicht aufweist, die nach Übertragung der Lumineszenzschicht auf das Dokument ausgehärtet wird.

**21.** Verfahren nach einem der Ansprüche 11 - 21, dadurch **gekennzeichnet,** daß das Transferband in seiner Breite so dimensioniert und beim Transfervorgang zum Dokument so positioniert wird, daß der Lumineszenzstoff ausschließlich entlang eines schmalen Streifens auf das Dokument übertragen wird.

**22.** Verfahren zur Echtheitsprüfung eines Dokuments gemäß einem der Ansprüche 1 bis 13, **dadurch gekennzeichnet,** daß
- das Dokument mit einer Anregungsgiielle beleuchtet wird und die dann sichtbar werdende, lumineszierende Struktur mit geeigneten Detektoren erfaßt und
- in ein Signal umgewandelt wird
- welches mit einem gespeicherten Referenzsignal verglichen wird, um die spezifische Oberflächenstruktur des Reliefs und deren Unversehrtheit zu prüfen.

**23.** Verfahren nach Anspruch 22, **dadurch gekennzeichnet,** daß das Referenzsignal auf der Karte gespeichert ist.

**24.** Verfahren nach Anspruch 22, **dadurch gekennzeichnet,** daß nur ein Teil des Bereichs, der ein Oberflächenrelief aufweist, zur Prüfung herangezogen wird.

**25.** Verfahren nach einem der Ansprüche 22 bis 24, **dadurch gekennzeichnet**, daß bei der Antastung des Oberflächenreliefs zumindest ein alphanumerisches Zeichen abgetastet wird.

**26.** Verfahren nach einem der Ansprüche 22 bis 25, **dadurch gekennzeichnet**, daß das Erfassen der lumineszierenden Struktur entlang einer Spur erfolgt.

**27.** Verfahren nach Anspruch 22 oder 23, **dadurch gekennzeichnet**, daß das gespeicherte Referenzsignal komprimiert ist.

**28.** Verfahren nach Anspruch 22 oder 23, **dadurch gekennzeichnet**, daß das gespeicherte Referenzsignal verschlüsselt ist.

**Claims**

**1.** A document with a surface relief having raised and/or depressed areas relative to the surface of the document, **characterized** in that the document is provided with at least one luminescent substance in at least a partial area of this surface relief, and this luminescent substance is present either only in the raised areas or only in the depressed areas.

**2.** The document of claim 1, **characterized** in that embossed characters to be used as a printing block form the surface relief.

3. The document of claim 2, **characterized** in that these embossed characters are provided by the high embossing method, are present in the form of elevations on the front of the card, and the luminescent substance is applied to the apex areas of these elevations.

4. The document of claim 2, **characterized** in that the embossed characters are provided by the deep embossing method, the characters being present in the form of depressions in the front of the document, and the luminescent substance is applied to the bottoms of these depressions.

5. The document of claim 1, **characterized** in that the surface relief is a random pattern.

6. The document of one or more of claims 1 to 5, **characterized** in that two or more luminescent substances emitting in different spectral ranges are present to form multicolor luminescent patterns.

7. The document of one or more of claims 1 to 6, **characterized** in that the surface relief is additionally inked with a visible color contrasting with the surroundings.

8. The document of any of claims 1 to 7, **characterized** in that the luminescent substances and the colors, if any, are present in separate layers.

9. The document of any of claims 1 to 8, **characterized** in that the luminescent substance is covered by a layer of varnish.

10. The document of claim 9, **characterized** in that the layer of varnish consists of a polymerizable resin.

11. The document of any of claims 1 to 10, **characterized** in that the luminescent substance is present at least partially in the document material due to diffusion or migration processes.

12. The document of one or more of claims 1 to 11, **characterized** in that the luminescent substance is transparent in nonactinic light.

13. The document of any of claims 1 to 12, **characterized** in that the luminescent substance is only present in a partial area of the surface relief preferably in the form of a narrow band which extends from one edge of the document to the opposite edge.

14. A method of producing the document of claim 1, **characterized** in that the luminescent substance is applied to raised areas of the surface relief by preparing a multilayer transfer band containing a luminescent substance at least in one of the layers to be transferred, and transferring this luminescent substance to the raised areas of the surface relief using pressure and temperature by the transfer method known as such.

15. The method of claim 14, **characterized** in that the document is made of plastics and the surface relief is produced during lamination by softening the plastics material of the document and transferring a surface relief located on a laminating plate.

16. The method of claim 15, **characterized** in that the surface relief to be transferred is formed on the laminating plate by chemical and/or mechanical methods such as etching or sand blasting.

17. The method of claim 14, **characterized** in that the surface relief is produced directly on the document by chemical, mechanical or thermal methods.

18. The method of any of claims 14 to 17, **characterized** in that a transfer band is used which contains the luminescent substances and optionally a visible color in a mixture in one layer.

19. The method of any of claims 14 to 17, **characterized** in that the transfer band contains the luminescent substances and colors, if any, in a plurality of separate, optionally overlapping layers.

20. The method of any of claims 14 to 19, **characterized** in that the transfer band has a polymerizable layer of varnish which is hardened after the luminescent layer has been transferred to the document.

21. The method of any of claims 11 to 21, **characterized** in that the transfer band is dimensioned in its width and positioned relative to the document during the transfer process in such a way that the luminescent substance is transferred to the document solely along a narrow strip.

22. A method for testing the authenticity of the document of any of claims 1 to 13, **characterized** in that
    - the document is illuminated with an excitation source and the luminescent structure then becoming visible is detected by suitable detectors, and
    - converted into a signal
    - which is compared with a stored reference signal to test the specific surface structure of the relief and the intactness thereof.

23. The method of claim 22, **characterized** in that the reference signal is stored on the card.

24. The method of claim 22, **characterized** in that only part of the area having a surface relief is used for testing.

25. The method of any of claims 22 to 24, **characterized** in that at least one alphanumeric character is scanned when the surface relief is scanned.

26. The method of any of claims 22 to 25, **characterized** in that the luminescent structure is detected along a track.

27. The method of claim 22 or 23, **characterized** in that the stored reference signal is compressed.

28. The method of claim 22 or 23, **characterized** in that the stored reference signal is encoded.

**Revendications**

1. Document muni d'un relief de surface revêtant la surface du document et présentant des zones surélevées et/ou en creux, caractérisé en ce que le document est muni partiellement au moins dans une zone partielle de ce relief de surface, d' au moins une substance luminescente et en ce que cette substance luminescente est présente soit seulement dans les zones en relief, soit seulement dans les zones en creux.

2. Document selon la revendication 1, caractérisé en ce que des signes d'empreinte susceptibles d'être utilisés comme cliché forment le relief de surface.

3. Document selon la revendication 2, caractérisé en ce que ces signes d'empreinte sont mise en oeuvre dans le procédé d'empreinte en relief sous la forme de parties en relief (recto) du document, la substance luminescente étant appliquée sur les zones de crête de ces parties en relief.

4. Document selon le revendication 2, caractérisé en ce que les signes d'empreinte sont réalisés par le procédé d'impression en creux, les signes étant présents sous la forme de cavités sur la face avant (recto) du document, et en ce que la substance luminescente est appliquée sur les fonds de vallée de ces cavités.

5. Document selon le revendication 1, caractérisé en ce que le relief de surface représente un dessin aléatoire.

6. Document selon une ou plusieurs des revendications 1 à 5, caractérisé en ce que sont présentes au moins deux substances luminescentes émettant dans des zones différentes du spectre, pour réaliser des dessins luminescents polychrones.

7. Document selon une ou plusieurs des revendications 1 à 6, caractérisé en ce que le relief de surface est traité de façon supplémentaire par un colorant visuellement perceptible et en contraste avec l'environnement.

**8.** Document selon l'une des revendications 1 à 7, caractérisé en ce que les substances luminescentes et, le cas échéant, les colorants sont présents en couches séparées.

**9.** Document selon l'une des revendications 1 à 8, caractérisé en ce que la substance luminescente est recouverte par une couche de vernis.

**10.** Document selon la revendication 9, caractérisé en ce que la couche de vernis est constituée d'une résine susceptible d'être polymérisée.

**11.** Document selon l'une des revendications 1 à 10, caractérisé en ce que la substance luminescente est présente au moins en partie dans le matériau du document, par des processus de diffusion ou de migration.

**12.** Document selon une ou plusieurs des revendications 1 à 11, caractérisé en ce que la substance luminescente est transparente en lumière non actinique.

**13.** Document selon l'une des revendications 1 à 12, caractérisé en ce que la substance luminescente est présente seulement dans une zone partielle du relief de surface, de préférence sous forme d'une bande étroite, qui court d'un bord du document jusqu'au bord opposé.

**14.** Procédé de fabrication d'un document selon la revendication 1, caractérisé en ce que, pour appliquer la substance luminescente sur les zones surélevées du relief de surface, on prépare une bande de transfert multi-couche qui contient une substance luminescente dans au moins une des couches à transférer et l'on transfère cette substance luminescente avec application de pression et de température, selon le procédé de transfert connu en soi, sur les zones surélevées du relief de surface.

**15.** Procédé selon la revendication 14, caractérisé en ce que le document est en matière plastique et que le relief de la surface est réalisé pendant la stratification par ramollissement de la matière plastique du document et transfert du relief de surface se trouvant sur une plaque de stratification.

**16.** Procédé selon la revendication 15, caractérisé en ce que le relief de surface à transmettre est réalisé sur la plaque de stratification par des procédés chimiques et/ou mécaniques, tels que l'attaque chimique ou les jets de sable.

**17.** Procédé selon la revendication 14, caractérisé en ce que le relief de la surface est réalisé, par des procédés chimiques, mécaniques ou thermiques directement sur le document.

**18.** Procédé selon l'une des revendications 14 à 17, caractérisé en ce qu'on utilise une bande de transfert, qui contient les substances luminescentes et, le cas échéant, un colorant visuellement perceptible, en mélange dans une couche.

**19.** Procédé selon l'une des revendications 14 à 17, caractérisé en ce que la bande de transfert contient des substances luminescentes et, le cas échéant, les colorants, dans plusieurs couches séparées qui, le cas échéant, se chevauchent.

**20.** Procédé selon l'une des revendications 14 à 19, caractérisé en ce que la bande de transfert comporte une couche de laque polymérisable et qui est durcie après transfert de la couche de substance luminescente sur le document.

**21.** Procédé selon l'une des revendications 11 à 20, caractérisé en ce que la bande de transfert présente une largeur dont les dimensions sont telles, et est positionnée par rapport au document, de façon telle que la substance luminescente soit transférée sur le document uniquement le long d'une bande étroite.

**22.** Procédé pour vérifier l'authenticité d'un document selon l'une des revendications 1 à 13, caractérisé en ce que:
- le document est éclairé par une source d'excitation et la structure luminescente, qui est alors devenue visible, est détectée par des carteurs appropriés et
- est transformée en un signal

- qui est comparé à un signal de référence enregistré, pour vérifier la structure spécifique de la surface et son intégrité.

23. Procédé selon la revendication 22, caractérisé en ce que le signal de référence est mis en mémoire sur la carte.

24. Procédé selon la revendication 22, caractérisé en ce que seulement une partie de la zone qui comporte un relief de surface est soumise à vérification.

25. Procédé selon l'une des revendications 22 à 24, caractérisé en ce qu'au moins un signe alphanumérique est vérifié lors du palpage du relief de surface.

26. Procédé selon l'une des revendications 22 à 25, caractérisé en ce que la détection de la structure luminescente est réalisée le long d'une piste.

27. Procédé selon la revendication 22 à 23, caractérisé en ce que le signal de référence mis en mémoire est comprimé.

28. Procédé selon la revendication 22 ou 23, caractérisé en ce que le signal de référence mis en mémoire est codé.

**FIG 1**

**FIG 2**

**FIG 3**

**FIG 4**

**FIG 5**

**FIG 6**

**FIG 7**

**FIG 8**

**FIG 9**